# EUROPÄISCHE PATENTSCHRIFT

(11) **EP 1 453 638 B1**
(45) Veröffentlichungstag und Bekanntmachung des Hinweises auf die Patenterteilung: **26.12.2007**
(21) Anmeldenummer: 02796507.8
(22) Anmeldetag: 06.12.2002
(51) Int. Cl.: B23Q 3/12, B23B 31/26

(54) **VORRICHTUNG ZUR BEFESTIGUNG EINES WERKZEUGS AN EINER WELLE SOWIE MASCHINENSPINDEL MIT EINER DERARTIGEN VORRICHTUNG**
DEVICE FOR FIXING A TOOL ON A SHAFT AND MACHINE SPINDLE COMPRISING SAME
DISPOSITIF POUR FIXER UN OUTIL SUR UN ARBRE ET BROCHE DE MACHINE COMPORTANT UN TEL DISPOSITIF

(30) Priorität: 11.12.2001 DE 10160705
(43) Veröffentlichungstag der Anmeldung: 08.09.2004
(73) Patentinhaber: Paul Müller GmbH & Co. KG Unternehmensbeteiligungen, 90411 Nürnberg (DE)
(72) Erfinder: FELDMEIER, Fritz, 90475 Nürnberg (DE); MÖLLER, Bernd, 91217 Hersbruck (DE)
(74) Vertreter: Lösch, Christoph Ludwig Klaus
(86) Internationale Anmeldenummer: PCT/DE2002/004483
(87) Internationale Veröffentlichungsnummer: WO 2003/049898

(56) Entgegenhaltungen:
- DE-A- 1 763 139
- DE-A- 2 758 858
- DE-C- 3 509 635
- US-A- 4 413 938

## Beschreibung

Die Erfindung betrifft eine Vorrichtung zur Befestigung eines Werkzeugs an einer Welle mit den Merkmalen des Oberbegriffs des Patentanspruchs 1, wie aus der DE-C1-3509 635 bekannt. Ferner betrifft die Erfindung eine Maschinenspindel mit einer Vorrichtung zur Befestigung eines Werkzeugs an einer Welle.

Der Erfindung liegt die Aufgabe zugrunde, eine Vorrichtung zur Befestigung eines Werkzeugs an einer Welle anzubieten, bei welcher das Werkzeug besonders zuverlässig an der Welle befestigt und von dieser wieder gelöst werden kann. Ferner soll eine Maschinenspindel mit einer Vorrichtung zur Befestigung eines Werkzeugs an einer Welle angebracht werden, bei welcher ein Werkzeugwechsel besonders zuverlässig durchzuführen ist.

Die Aufgabe wird für die Vorrichtung durch die Merkmale des kennzeichnenden Teils des Patentanspruchs 1 in Verbindung mit den Merkmalen des Oberbegriffs gelöst. Vorteilhafte Ausführungsformen der Vorrichtung werden in den Unteransprüchen 2 - 18 beschrieben. Für die Maschinenspindel wird die Aufgabe durch die Merkmale des Patentanspruchs 19 gelöst.

Bei der erfindungsgemäßen Vorrichtung zur Befestigung eines Werkzeugs an einer Welle besitzt diese eine in der Welle axial verschiebbare an sich bekannte Zugstange zur lösbaren Arretierung von an der Welle befestigten Werkzeugen. Insbesondere zum automatischen Werkzeugwechsel in automatischen Werkzeugmaschinen (z.B. von Schleif- oder Fräsmaschinen mit Maschinenspindeln) ist das in der jeweilige Maschine aufgenommene Werkzeug schnell und sicher aufzunehmen und innerhalb kürzester Zeit zu lösen und durch ein neues Werkzeug auszutauschen. Hierbei wird die Zugstange in eine herausgefahrene axiale Außenposition verschoben, bei welcher das Werkzeug entsperrt und entnommen und ein neues Werkzeug eingesetzt werden kann. Daraufhin fährt die Zugstange wiederum in axialer Richtung in die Hohlwelle zurück und arretiert das eingelegte neue Werkzeug.

Erfindungsgemäß ist eine derartige Zugstange verdrehsicher in der Welle der Vorrichtung aufgenommen und besitzt ein Außengewinde, wobei auf dem Außengewinde ein Gewindekörper mit einem korrespondierenden Innengewinde (z.B. eine Gewindemutter) angebracht ist. Durch Drehen des Gewindekörpers relativ zur verdrehsicher aufgenommenen Zugstange wird die Zugstange axial innerhalb des in ihrer axialen Richtung fest in der Vorrichtung aufgenommenen Gewindekörper verschoben, so daß die gewünschte Axialbewegung der Zugstange zum Werkzeugwechsel erfolgt.

Vorteilhafterweise besitzt die Zugstange eine Verlängerung zur Anbringung des Außengewindes. Damit kann der Gewindekörper auch mit seinen Lagerelementen im Endbereich der Zugstange angebracht werden.

Durch ein Federelement zur Druckbeaufschlagung der Zugstange in axialer Richtung kann die Zugstange und das im Spannfutter der Zugstange aufgenommene Werkzeug besonders sicher arretiert werden, da auch bei auftretenden Vibrationen und unstetigen Bearbeitungskräften eine ständige axiale Vorspannung der Zugstange und damit eine sichere Arretierung des aufgenommenen Werkzeugs erreicht wird.

Über eine axiale und radiale Lagerung ist der Gewindekörper insbesondere in axialer Richtung lagestabil in der Vorrichtung aufgenommen. Beim Verdrehen des Gewindekörpers bleibt dieser innerhalb der Vorrichtung lagestabil und es tritt die gewünschte axiale Bewegung der Zugstange innerhalb des Gewindekörpers durch Zusammenwirken des Innengewindes des Gewindekörpers mit dem Außengewinde der Zugstange auf.

Vorteilhafterweise wirkt das beschriebene Federelement insbesondere auf den Gewindekörper. Dies kann konstruktiv realisiert werden, in dem der Gewindekörper mit seiner axialen und radialen Lagerung in einer Gewindebüchse aufgenommen ist, welche axial verschiebbar und vom Federelement druckbeaufschlagt ist. Bei Druckbeaufschlagung des Federelements kann der Gewindekörper innerhalb der Gewindebüchse axial nicht verschoben werden. Die Verdrehbarkeit des Gewindekörpers bleibt sichergestellt.

Der Gewindekörper besitzt auch ein Außengewinde, welches in einem korrespondierenden Innengewinde der Vorrichtung aufgenommen ist. Damit wird durch Rotation des Innengewindes der Vorrichtung eine Verdrehung des Gewindekörpers erreicht, welche durch dessen Innengewinde wiederum - wie bereits beschrieben - an die Zugstange weitergeleitet wird und deren axiale Verlagerung einleitet. Insgesamt entsteht damit ein Differenzgewinde zwischen dem Innengewinde der Vorrichtung und dem Gewindekörper, der ein Außen- und ein Innengewinde aufweist. Durch Auswahl unterschiedlicher Steigungen der Gewindepaarungen, Außengewinde der Zugstange/Innengewinde des Gewindekörpers sowie Außengewinde des Gewindekörpers/Innengewinde der Vorrichtung kann eine gewünschte Übersetzung je nach Anforderungen gewählt werden. So kann ein Übersetzungsverhältnis gewählt werden, welches durch eine geringe Anzahl von Umdrehungen des Innengewindes bereits den gewünschten axialen Versatz der Zugstange erreicht. Ferner kann eine kraftsparende Übersetzung gewählt werden, wobei mehrere Gewindeumdrehungen des Innengewindes der Vorrichtung zugelassen werden. Sämtliche Gewinde sind insbesondere selbsthemmend und können damit axiale Kräfte, die auf die Zugstange wirken, aufnehmen.

Der Gewindekörper ist insbesondere motorisch verdrehbar, so daß ein automatischer Werkzeugwechsel durch eine axiale Verschiebung der Zugstange stattfinden kann. Hierzu ist insbesondere ein Motorelement vorgesehen, welches einen auf einer Verlängerung des Gewindekörpers angebrachten Rotor aufweisen kann. Bei einer axialen Verlagerung des Gewindekörpers (wie dies bei dem beschriebenen Differenzgewinde auftritt) wird damit auch der Rotor axial verlagert. Vorteilhafterweise ist dem Rotor ein Stator zugeordnet, über den der Rotor auch in verschiedenen axialen Positionen ansteuerbar ist.

Ein derartiges Motorelement kann über eine Festkupplung oder über eine schaltbare Kupplung mit dem Gewindekörper der Vorrichtung verbunden sein.

Wenn die beschriebene Vorrichtung in eine Maschinenspindel aufgenommen ist, kann durch motorisches Verdrehen des Gewindekörpers die gewünschte axiale Verlagerung der Zugstange zum Lösen bzw. Befestigen eines aufgenommenen Werkzeugs in der Vorrichtung erreicht werden. Damit kann die erfindungsgemäße Vorrichtung insbesondere für automatische Werkzeugmaschinen in Bearbeitungsprozessen mit einer Vielzahl von automatisch durchzuführenden Werkzeugwechseln eingesetzt werden.

In einer besonders vorteilhaften Ausführungsform bei einer Verwendung der beschriebenen Vorrichtung in einer Maschinenspindel kann der Antrieb der Maschinenspindel auch zur Verdrehung des Gewindekörpers (bzw. zur Betätigung des Innengewindes der Vorrichtung bei vorhandenem Differenzgewinde) verwendet werden. Damit besitzt der Antrieb der Maschinenspindel eine Doppelfunktion und dient einerseits zum Antrieb der Welle zur Erzeugung der Rotationsbewegung des in der Welle aufgenommenen Werkzeugs und andererseits beim Werkzeugwechsel als Kraftquelle zur (un-) mittelbaren Verdrehung des Gewindekörpers und zur Herbeiführung der gewünschten axialen Verschiebung der Zugstange.

Bei der beschriebenen Betätigung des Gewindekörpers durch ein separates Motorelement ist sicherzustellen, daß sowohl die Zugstange als auch die Welle verdrehsicher arretiert werden. Hierzu kann die Welle eine Verdrehsperre z.B. in Form einer Keilnut mit einem einschiebbaren Keil aufweisen.

Ferner kann die Welle bei einem lagegeregelten Spindelantrieb durch den Spindelmotor selbst verdrehsicher in einer Position gehalten werden.

Die Erfindung ist anhand von Ausführungsbeispielen in den Zeichnungsfiguren näher erläutert. Es zeigen:
- Fig. 1: eine Schnittdarstellung durch eine Maschinenspindel mit einer ersten Ausführungsform der Vorrichtung,
- Fig. 2: eine Schnittdarstellung durch eine Maschinenspindel mit einer weiteren Ausführungsform der Vorrichtung,
- Fig. 3: ein Schnitt durch eine Maschinenspindel mit einem Motorelement mit verschiebbarem Rotor,
- Fig. 4: ein Schnitt durch eine Maschinenspindel mit Federausgleich,
- Fig. 5: ein Schnitt durch eine Maschinenspindel mit Motorelement mit schaltbarer Kupplung sowie
- Fig. 6: eine Schnittdarstellung durch eine Maschinenspindel mit einer weiteren Ausführungsform der Vorrichtung.

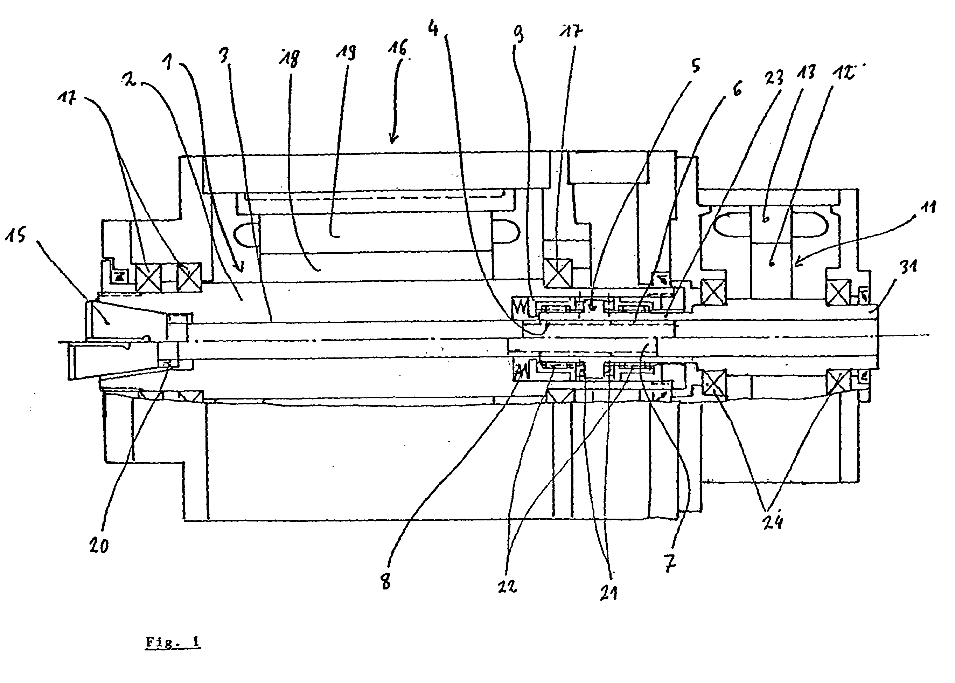

Fig. 1 zeigt eine Vorrichtung 1 mit einer Welle 2, mit einer Zugstange 3 und einem an sich bekannten Spannfutter 15 zur Aufnahme eines nicht abgebildeten Werkzeugs (z.B. einer Schleifscheibe oder eines Fräswerkzeugs). Oberhalb der Mittellinie von Fig. 1 ist die Zugstange 3 in ihrer eingefahrenen axial nach hinten verschobenen Position mit eingezogenem (d.h. gespanntem) Spannfutter 15 abgebildet. Unterhalb der Mittellinie ist die Zugstange 3 axial nach vorne (in der Zeichnung nach links) verschoben, so daß das Werkzeug entnommen oder ein neues Werkzeug eingesetzt werden kann.

Die Vorrichtung 1 ist in Fig. 1 in eine Maschinenspindel 16 integriert, wobei die Welle 2 über Lager 17 in der Maschinenspindel 16 aufgenommen ist. Die Maschinenspindel 16 besitzt einen Antriebsmotor mit einem Rotor 18 und einem Stator 19.

An der Zugstange 3 ist an einer Verlängerung 7 ein Außengewinde 4 angebracht, auf welchem ein Gewindekörper 5 mit Innengewinde 6 aufgeschraubt ist. Die verwendete Kombination von Außengewinde 4 und Innengewinde 6 ist insbesondere selbsthemmend ausgeführt. Bei einer Verdrehung des Gewindekörpers 5 wird die z.B. über eine Verdrehsicherung 20 verdrehsicher und nur axial verschiebbar gelagerte Zugstange 3 in axialer Richtung verschoben und kann von der oberhalb der Mittellinie abgebildeten eingezogenen Endposition in die unterhalb der Mittellinie abgebildete ausgefahrene (geöffnete) Endposition verfahren werden.

Der Gewindekörper 5 ist dabei über axiale Lager 21 und radiale Lager 22 axial fixiert aufgenommen. Bei einer Verdrehung des Gewindekörpers 5 relativ zur Zugstange 3 bleibt der Gewindekörper 5 in seiner Position gegenüber der Vorrichtung 1 und der Maschinenspindel 16, während sich die Zugstange 3 - wie beschrieben - axial verfährt.

Die axialen Lager 21 und radialen Lager 22 des Gewindekörpers 5 sind insbesondere in einer Gewindebüchse 9 aufgenommen, welche über ein Federelement 8 gegenüber der Vorrichtung 1 und insbesondere gegenüber dem Gehäuse der Maschinenspindel 16 abgestützt ist, so daß der Gewindekörper 5 ständig druckbeaufschlagt ist, um z.B. im Bereich des Spannfutters 15 eingeleitete Setzkräfte oder unstetige Belastungskräfte abfedern zu können.

Der Gewindekörper 5 kann auch ohne Federelement 8 und Gewindebüchse 9 verwendet werden.

Gemäß Fig. 1 ist das Außengewinde 4 der Zugstange 3 in einer Verlängerung 7 der Zugstange 3 angebracht. Der Gewindekörper 5 besitzt eine Verlängerung 23, welche in einen über Lager 24 aufgenommene Hohlwelle 31 mit dem Rotor 12 eines Motorelements 11 übergeht. Zum Motorelement 11 gehört auch der Stator 13. Bei Aktivierung des Motorelements 11 kann der Gewindekörper 5 wie gewünscht verdreht werden, um die axiale Bewegung der Zugstange 3 zum Werkzeugwechsel herbeizuführen. Bei Aktivierung des Motorelements 11 wird die Welle 2 der Vorrichtung 1 bzw. der Maschinenspindel 16 mechanisch (z.B. über eine an sich bekannte Verdrehsicherung z.B. eine Keilsicherung) oder durch eine bereits beschriebene Lageregelung des Motors der Maschinenspindel 16 verdrehsicher arretiert.

Beim Betrieb der Motorspindel 16 über deren aus Rotor 18 und Stator 19 bestehenden Antriebsmotor rotieren neben der Welle 2, der Gewindekörper 5 und der Rotor 12 des Motorelements 11 mit.

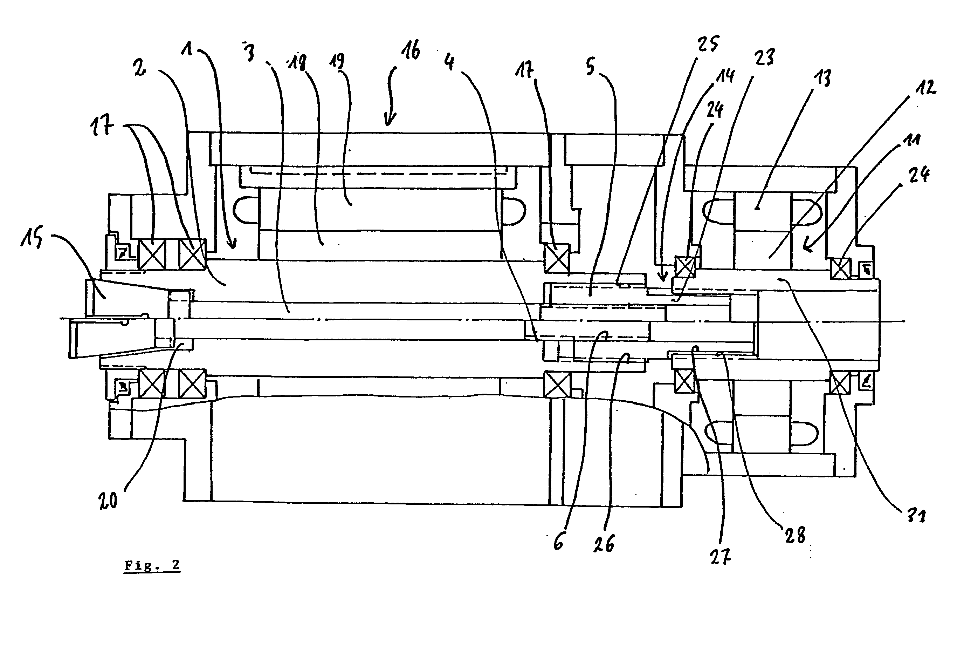

In der Ausführungsform gemäß Fig. 2 besitzt der Gewindekörper 5 ein Außengewinde 25, welches in einem Innengewinde 26 der Vorrichtung 1 oder der Welle 2 aufgenommen ist (Differenzgewinde). Beim Verdrehen des Gewindekörpers 5 wird die axiale Verschiebung der Zugstange 3 durch die Kombination der gewählten Gewindekombinationen Außengewinde 25 und Innengewinde 26 sowie Außengewinde 4 und Innengewinde 6 gewählt. Hierdurch können gewünschte axiale Verschiebungen in Abhängigkeit von der Anzahl der Umdrehungen des Gewindekörpers 5 gewählt werden.

Der Gewindekörper 5 ist über seine Verlängerung 23 wiederum mit dem Rotor 12 des Motorelements 11 verbunden. Im Gegensatz zur Ausführungsform gemäß Fig. 1 ist der Gewindekörper 5 in axialer Richtung nicht lagestabil aufgenommen, sondern verändert bei seiner Verdrehung gemeinsam mit der Zugstange 3 seine axiale Position, wobei jedoch auch eine Relativbewegung zwischen Zugstange 3 und Gewindekörper 5 auftritt. Damit befindet sich der Gewindekörper 5 in seiner oberhalb der Mittellinie gemäß Fig. 2 abgebildeten eingefahrenen Position der Zugstange 3 in einer näheren Position zum Spannfutter 15 verglichen mit der ausgefahrenen Position des Spannfutters 15 unterhalb der Mittellinie gemäß Fig. 2. Diese Lageverschiebungen des Gewindekörpers 5 können bei in axialer Richtung lagestabil angeordnetem Rotor 12 des Motorelements 11 über eine entsprechende Kupplung 14 ermöglicht werden. Zur Realisierung der Kupplung 14 kann die Verlängerung 23 des Gewindekörpers 5 ein an sich bekanntes umlaufendes Vielkeilprofil 27 besitzen, dessen Außenkeile in ein korrespondierendes Vielkeilprofil 28 einer Hohlwelle 31 eingreift. Auf der Hohlwelle 31 ist der Rotor 12 angebracht. Die Vielkeilprofile 27, 28 sind im ständigen Eingriff, so daß eine Drehbewegung des Rotors 12 auf den Gewindekörper 5 übertragen wird.

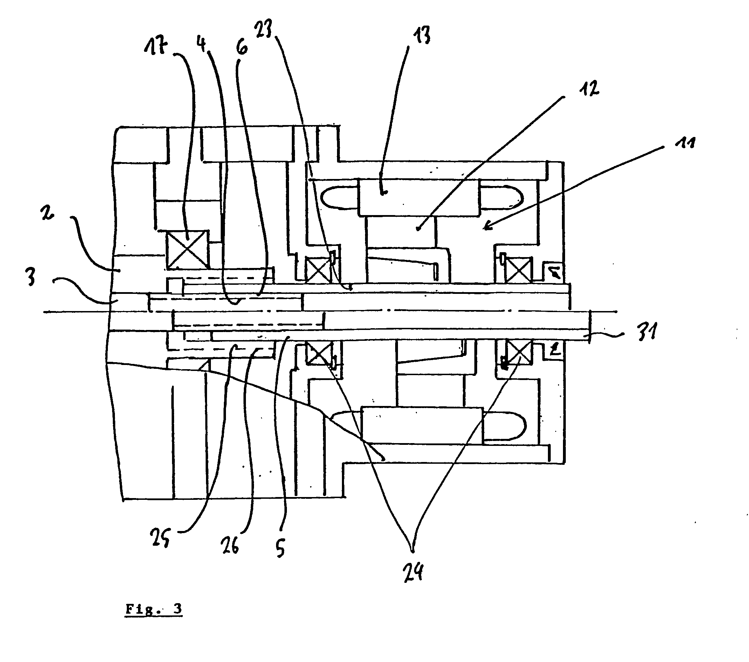

Fig. 3 zeigt einen auf der Verlängerung 23 des Gewindekörpers 5 angebrachten Rotor 12 des Motorelements 11, welcher bei axialer Verschiebung des Gewindekörpers 5 (bei der Ausführungsform mit Differenzgewinde gemäß Fig. 2) ebenfalls axial verschoben wird. Durch den länglich ausgeführten Stator 13 befindet sich der Rotor 12 sowohl in der einen Endposition (oberhalb der Mittellinie gemäß Fig. 3) als auch in der anderen Endposition (unterhalb der Mittellinie gemäß Fig. 3) im Wirkbereich des Stators 13 und kann über diesen betätigt werden, so daß eine Rotation des Rotors 12 und damit des Gewindekörpers 5 auftritt.

In analoger Ausführungsform kann der Rotor 12 länglich gegenüber einem verkürzten Stator 13 ausgeführt sein (nicht abgebildet).

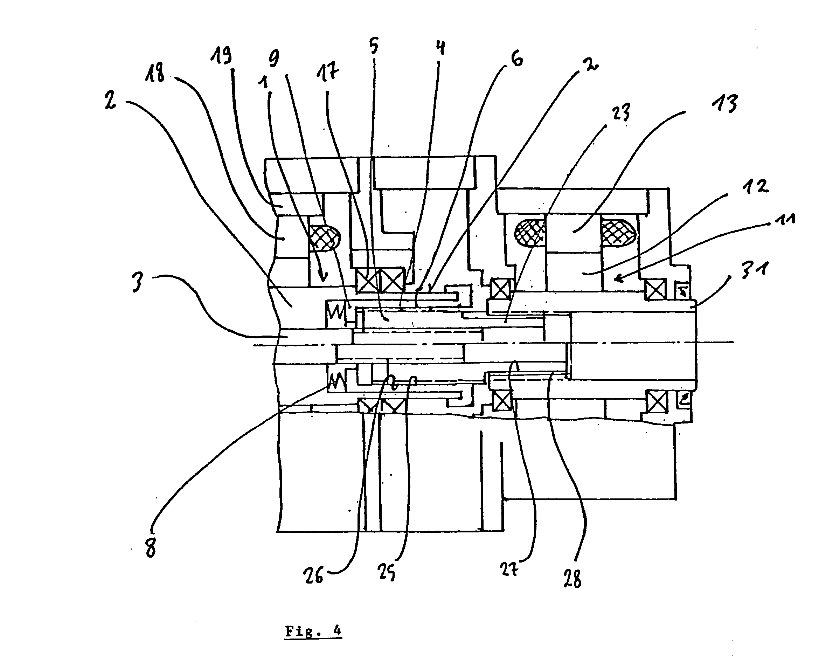

Fig. 4 zeigt eine Ausführungsform mit Vielkeilprofilen 27, 28 und mit Differenzgewinde, d.h. mit einer Gewindekombination von Außengewinde 4 und Innengewinde 6 sowie Außengewinde 25 und Innengewinde 26, wobei das Innengewinde 26 der Vorrichtung 1 wiederum in einer Gewindebüchse 9 aufgenommen ist, welche über ein Federelement 8 in axialer Richtung druckbeaufschlagt ist. Hierdurch können die beschriebenen axialen unstetigen Belastungskräfte (z.B. Setzkräfte des Werkzeugs oder unstetige Bearbeitungsstoßkräfte) über das Federelement 8 abgefedert werden.

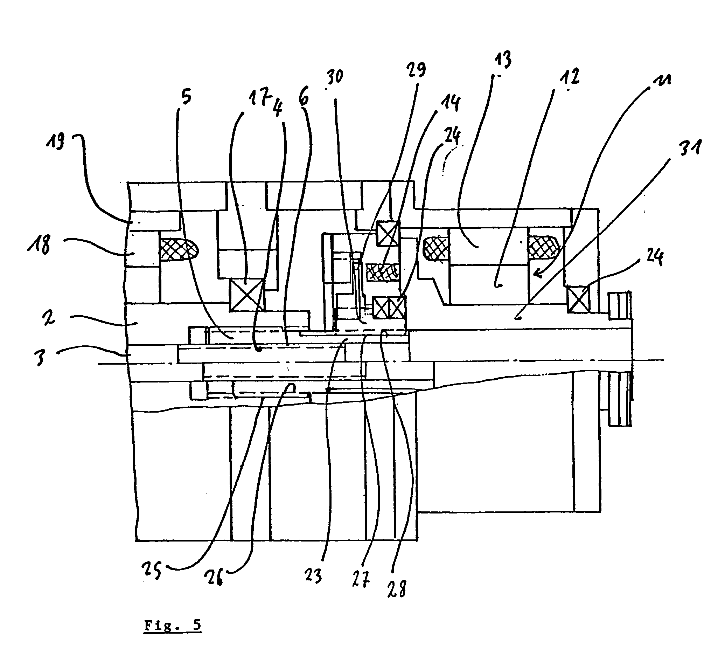

Aus Fig. 5 geht eine Ausführungsform mit Differenzgewinde hervor, bei welcher der auf einer Hohlwelle 31 angebrachte Rotor 12 über eine an sich bekannte schaltbare Kupplung 14 mit einer Kupplungsscheibe 29 und mit einer Kupplungsnabe 30 über Vielkeilprofile 27, 28 mit dem Gewindekörper 5 über dessen Verlängerung 23 verbunden ist. Die Kupplung 14 ist dabei entweder als geschaltete Kupplung oder als selbstschaltende Kupplung ausgebildet, welche Drehzahl abhängig eingreift oder sich löst. Ferner können an sich bekannte reib- oder formschlüssige Kupplungsmodelle verwendet werden.

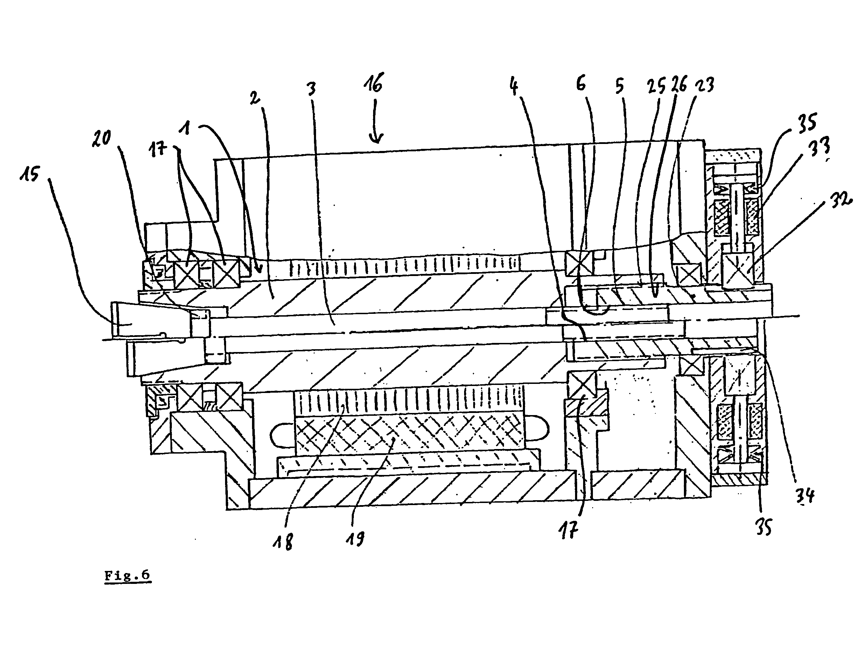

Eine besonders vorteilhafte Ausführungsform der erfindungsgemäßen Vorrichtung 1 geht aus Fig. 6. Die Vorrichtung 1 ist hierbei wiederum ihn eine Maschinenspindel 16 integriert. Der aus Rotor 18 und Stator 19 bestehende Antrieb der Maschinenspindel 16 dient nun einerseits zum Antrieb der Welle 2 zur Erzeugung der Werkzeugrotation bei betriebener Maschinenspindel 16. Andererseits dient der Antrieb der Maschinenspindel 16 zur Drehverstellung des Gewindekörpers 5, der auf an sich beschriebene Art und Weise als Differenzgewinde ausgebildet ist und drehbar innerhalb des Innengewindes 26 der Welle 2 über sein Außengewinde 25 geführt ist. Die Zugstange 3 wird dabei über ihr Außengewinde 4 im Innengewinde 6 des Gewindekörpers 5 aufgenommen.

Durch Verdrehung der Welle 2 wird der drehstabil arretierte Gewindekörper 5 axial verschoben. Zur Drehstabilisierung kann der Gewindekörper 5 ein Vielkeilprofil 34 aufweisen, in welches ein korrespondierend geformter Kolben 32 durch Betätigung über eine Magnetspule 33 eingreift. Während der Verdrehung des Gewindekörpers 5 verschiebt sich die im Gewindekörper 5 aufgenommene Zugstange 3. Somit kann die Zugstange 3 von einer ausgefahrenen Position (oberhalb der Mittellinie) in eine eingezogene Position (unterhalb der Mittellinie) und zurück zum Werkzeugwechsel verbracht werden. Nach Abschluß des Werkzeugwechsels wird der Kolben 32 durch Federkraft des Federelements 35 wieder gelöst und die Drehverbindung zwischen Welle 2 und Zugstange 3 wird wieder hergestellt. Daraufhin kann die Maschinenspindel 16 wieder betrieben werden und es überträgt sich die Rotation der Welle 2 auf das im Spannfutter 15 der Maschinenspindel 16 aufgenommene Werkzeug.

Bei betriebener Maschinenspindel 16 rotiert der Gewindekörper 5 gemeinsam mit der Zugstange 3 in axial fixierter Position innerhalb der Welle 2.

### BEZUGSZEICHEN

- 1: Vorrichtung
- 2: Welle
- 3: Zugstange
- 4: Außengewinde
- 5: Gewindekörper
- 6: Innengewinde
- 7: Verlängerung
- 8: Federelement
- 9: Gewindebüchse
- 11: Motorelement
- 12: Rotor
- 13: Stator
- 14: Kupplung
- 15: Spannfutter
- 16: Maschinenspindel
- 17: Lager
- 18: Rotor
- 19: Stator
- 20: Verdrehsicherung
- 21: axiales Lager
- 22: radiales Lager
- 23: Verlängerung
- 24: Lager
- 25: Außengewinde
- 26: Innengewinde
- 27: Vielkeilprofil
- 28: Vielkeilprofil
- 29: Kupplungsscheibe
- 30: Kupplungsnabe
- 31: Hohlwelle
- 32: Kolben
- 33: Magnetspulel
- 34: Vielkeilprofil
- 35: Federelement

## Patentansprüche

1. Vorrichtung zur Befestigung eines Werkzeugs an einer Welle (2) mit einer in der Welle axial verschiebbaren Zugstange (3) zur lösbaren Arretierung eines an der Welle befestigten Werkzeugs, insbesondere zum automatischen Werkzeugwechsel bei Werkzeugmaschinen,
wobei die Zugstange (3) verdrehsicher in der Welle (2) aufgenommen ist und ein Außengewinde (4) aufweist,
auf dem Außengewinde (4) ein Gewindekörper (5) mit einem korrespondierenden Innengewinde (6) angebracht ist und
die Zugstange (3) zum Werkzeugwechsel durch Drehung des Gewindekörpers (5) innerhalb der Welle (2) axial verschiebbar ist,
**dadurch gekennzeichnet, dass** der Gewindekörper (5) ein Außengewinde (25) aufweist, welches in einem korrespondierenden Innengewinde (26) der Vorrichtung (1) aufgenommen ist.

2. Vorrichtung nach Anspruch 1,
**dadurch gekennzeichnet, daß** die Zugstange (3) eine Verlängerung (7) zur Anbringung des Außengewindes (4) aufweist.

3. Vorrichtung nach Anspruch 1 oder 2,
**dadurch gekennzeichnet, daß** ein Federelement (8) zur Druckbeaufschlagung der Zugstange (3) in axialer Richtung vorgesehen ist.

4. Vorrichtung nach einem der vorhergehenden Ansprüche
**dadurch gekennzeichnet, daß** der Gewindekörper (5) eine axiale und radiale Lagerung besitzt.

5. Vorrichtung nach einem der vorhergehenden Ansprüche,
**dadurch gekennzeichnet, daß** die Lagerung des Gewindekörpers (5) in einer Gewindebüchse (9) aufgenommen ist.

6. Vorrichtung nach Anspruch 5,
**dadurch gekennzeichnet, daß** die Gewindebüchse (9) axial verschiebbar und verdrehfest in der Vorrichtung (1) aufgenommen ist.

7. Vorrichtung nach Anspruch 5 oder 6,
**dadurch gekennzeichnet, daß** das Federelement (8) zur axialen Druckbeaufschlagung der Gewindebüchse (9) dient.

8. Vorrichtung nach einem der vorhergehenden Ansprüche,
**dadurch gekennzeichnet, daß** der Gewindekörper (5) motorisch verdrehbar ist.

9. Vorrichtung nach Anspruch 8,
**dadurch gekennzeichnet, daß** ein Motorelement (11) zur motorischen Verdrehung des Gewindekörpers (5) vorgesehen ist.

10. Vorrichtung nach Anspruch 8 der 9,
**dadurch gekennzeichnet, daß** das Motorelement (11) einen auf einer Verlängerung (23) des Gewindekörpers (5) angebrachten Rotor (12) aufweist.

11. Vorrichtung nach Anspruch 10,
**dadurch gekennzeichnet, daß** der Rotor (12) axial verschiebbar ausgebildet und sowohl in einer vorderen als auch hinteren axialen Position über einen Stator (13) ansteuerbar ist.

12. Vorrichtung nach einem der Ansprüche 9-11,
**dadurch gekennzeichnet, daß** das Motorelement (11) über eine Kupplung (14) mit dem Gewindekörper (5) verbunden ist.

13. Vorrichtung nach Anspruch 12,
**dadurch gekennzeichnet, daß** die Kupplung (14) eine Festkupplung ist.

14. Vorrichtung nach Anspruch 12,
**dadurch gekennzeichnet, daß** die Kupplung (14) eine schaltbare Kupplung ist.

15. Vorrichtung nach einem der vorhergehenden Ansprüche,
**dadurch gekennzeichnet, daß** die Vorrichtung (1) in einer Maschinenspindel (16) aufgenommen ist.

16. Vorrichtung nach Anspruch 15,
**dadurch gekennzeichnet, daß** der Antrieb der Maschinenspindel (16) zur Verdrehung des Gewindekörpers (5) dient.

17. Vorrichtung nach einem der vorhergehenden Ansprüche ,
**dadurch gekennzeichnet, daß** eine Verdrehsperre zur Fixierung der Zugstange (3) vorgesehen ist.

18. Vorrichtung nach Anspruch 17,
**dadurch gekennzeichnet, daß** die Zugstange (3) mindestens eine Keilnut zur Aufnahme der Verdrehsperre aufweist.

19. Maschinenspindel (16) mit einer Vorrichtung zur Befestigung eines Werkzeugs an einer Welle (2) nach einem der Ansprüche 1 - 18.

## Claims

1. Device for fixing a tool on a shaft (2), having a drawbar (3) which is axially displaceable in the shaft and is intended for the releasable locking of a tool fixed on the shaft, in particular for the automatic tool change in machine tools, the drawbar (3) being accommodated in the shaft (2) in such a way as to be locked against rotation and having an external thread (4), a threaded body (5) which has a corresponding internal thread (6) being attached on the external thread (4), and the drawbar (3), for the tool change, being axially displaceable by rotating the threaded body (5) inside the shaft (2), **characterized in that** the threaded body (5) has an external thread (25) which is accommodated in a corresponding internal thread (26) of the device (1).

2. Device according to Claim 1, **characterized in that** the drawbar (3) has an extension (7) for providing the external thread (4).

3. Device according to Claim 1 or 2, **characterized in that** a spring element (8) is provided for applying pressure to the drawbar (3) in the axial direction.

4. Device according to one of the preceding claims,
**characterized in that** the threaded body (5) has an axial and radial bearing arrangement.

5. Device according to one of the preceding claims, **characterized in that** the bearing arrangement of the threaded body (5) is accommodated in a threaded bush (9).

6. Device according to Claim 5, **characterized in that** the threaded bush (9) is accommodated in the device (1) in an axially displaceable and rotationally fixed manner.

7. Device according to Claim 5 or 6, **characterized in that** the spring element (8) serves to apply pressure axially to the threaded bush (9).

8. Device according to one of the preceding claims, **characterized in that** the threaded body (5) can be rotated in a motor-operated manner.

9. Device according to Claim 8, **characterized in that** a motor element (11) is provided for the motor-operated rotation of the threaded body (5).

10. Device according to Claim 8 or 9, **characterized in that** the motor element (11) has a rotor (12) attached to an extension (23) of the threaded body (5).

11. Device according to Claim 10, **characterized in that** the rotor (12) is designed to be axially displaceable and can be activated in both a front and a rear axial position via a stator (13).

12. Device according to one of Claims 9 to 11, **characterized in that** the motor element (11) is connected to the threaded body (5) via a coupling (14).

13. Device according to Claim 12, **characterized in that** the coupling (14) is a fixed coupling.

14. Device according to Claim 12, **characterized in that** the coupling (14) is a clutch.

15. Device according to one of the preceding claims, **characterized in that** the device (1) is accommodated in a machine spindle (16).

16. Device according to Claim 15, **characterized in that** the drive of the machine spindle (16) serves to rotate the threaded body (5).

17. Device according to one of the preceding claims, **characterized in that** an anti-rotation lock is provided for fixing the drawbar (3).

18. Device according to Claim 17, **characterized in that** the drawbar (3) has at least one keyway for accommodating the anti-rotation lock.

19. Machine spindle (16) having a device for fixing a tool on a shaft (2) according to one of Claims 1 to 18.

## Revendications

1. Dispositif pour fixer un outil sur un arbre (2) comprenant une tige de traction (3) déplaçable axialement dans l'arbre pour bloquer de manière amovible un outil fixé sur l'arbre, notamment pour un changement automatique d'outil sur des machines-outils,
la tige de traction (3) étant reçue de manière solidaire en rotation dans l'arbre (2) et présentant un filetage externe (4),
un corps fileté (5) avec un filetage interne correspondant (6) étant monté sur le filetage externe (4) et
la tige de traction (3) pouvant être déplacée axialement en vue du changement d'outil par rotation du corps fileté (5) à l'intérieur de l'arbre (2),
**caractérisé en ce que** le corps fileté (5) présente un filetage externe (25) qui est reçu dans un filetage interne (26) correspondant du dispositif (1).

2. Dispositif selon la revendication 1,
**caractérisé en ce que** la tige de traction (3) présente un prolongement (7) pour pratiquer le filetage externe (4).

3. Dispositif selon la revendication 1 ou 2,
**caractérisé en ce qu'**un élément de ressort (8) est prévu pour solliciter en pression la tige de traction (3) dans la direction axiale.

4. Dispositif selon l'une quelconque des revendications précédentes,
**caractérisé en ce que** le corps fileté (5) possède un support sur palier axial et radial.

5. Dispositif selon l'une quelconque des revendications précédentes,
**caractérisé en ce que** le support sur palier du corps fileté (5) est reçu dans une douille filetée (9) .

6. Dispositif selon la revendication 5,
**caractérisé en ce que** la douille filetée (9) peut être déplacée axialement et est reçue de manière solidaire en rotation dans le dispositif (1).

7. Dispositif selon la revendication 5 ou 6,
**caractérisé en ce que** l'élément de ressort (8) sert à solliciter axialement en pression la douille filetée (9).

8. Dispositif selon l'une quelconque des revendications précédentes,
**caractérisé en ce que** le corps fileté (5) peut être déplacé par moteur.

9. Dispositif selon la revendication 8,
**caractérisé en ce qu'**un élément de moteur (11) est prévu pour 1a rotation motorisée du corps fileté (5) .

10. Dispositif selon la revendication 8 ou 9,
**caractérisé en ce que** l'élément de moteur (11) présente un rotor (12) monté sur un prolongement (23) du corps fileté (5).

11. Dispositif selon la revendication 10,
**caractérisé en ce que** le rotor (12) est réalisé de manière déplaçable axialement et peut être commandé à la fois dans une position avant et dans une position arrière axiale par le biais d'un stator (13).

12. Dispositif selon l'une quelconque des revendications 9 à 11,
**caractérisé en ce que** l'élément de moteur (11) est connecté au corps fileté (5) par le biais d'un accouplement (14).

13. Dispositif selon la revendication 12,
**caractérisé en ce que** l'accouplement (14) est un accouplement fixe.

14. Dispositif selon la revendication 12,
**caractérisé en ce que** l'accouplement (14) est un accouplement commutable.

15. Dispositif selon l'une quelconque des revendications précédentes,
**caractérisé en ce que** le dispositif (1) est reçu dans une broche de machine (16).

16. Dispositif selon la revendication 15,
**caractérisé en ce que** l'entraînement de la broche de machine (16) sert à faire tourner le corps fileté (5).

17. Dispositif selon l'une quelconque des revendications précédentes,
**caractérisé en ce qu'**un dispositif de blocage en rotation est prévu pour la fixation de la tige de traction (3).

18. Dispositif selon la revendication 17,
**caractérisé en ce que** la tige de traction (3) présente au moins une rainure de clavetage pour recevoir le dispositif de blocage en rotation.

19. Broche de machine (16) comprenant un dispositif pour la fixation d'un outil sur un arbre (2) selon l'une quelconque des revendications 1 à 18.
